(19) Europäisches Patentamt
European Patent Office
Office européen des brevets

(11) Publication number: **0 096 316 A1**

# (12) EUROPEAN PATENT APPLICATION

(21) Application number: 83105286.5

(22) Date of filing: 27.05.83

(51) Int. Cl.$^3$: G 01 J 3/28

(30) Priority: 07.06.82 HU 183082

(43) Date of publication of application: 21.12.83 Bulletin 83/51

(84) Designated Contracting States: AT DE FR GB IT SE

(71) Applicant: KÖZPONTI ELELMISZERIPARI KUTATO INTEZET
Herman Otto ut 15
H-1022 Budapest(HU)

(72) Inventor: Nádai, Béla, Dr.
Rácz Aladár utca 7
H-1121 Budapest(HU)

(72) Inventor: Czabaffy, András
Karinthy Frigyes ut 30-32
H-1111 Budapest(HU)

(72) Inventor: Horváth, Loránd, Dr.
Tusnádi utca 45
H-1125 Budapest(HU)

(72) Inventor: Kaffka, Károly, Dr.
Abel Jenő utca 30
H-1113 Budapest(HU)

(74) Representative: Kern, Wolfgang, Dipl.-Ing.
Patentanwälte et al,
Dipl.-Ing. Herbert Tischer Dipl.-Ing. Wolfgang Kern
Dipl.-Chem. Dr. H.P. Brehm Albert-Rosshaupter-Strasse 65
D-8000 München 70(DE)

## (54) Method and apparatus for measuring spectra.

(57) The invention relates on the one part to a method for measuring spectra in the course of which the intensity of the radiation to be tested is measured while varying the wavelength of the radiation. The measurement is performed either by varying the wavelength of the radiation step-by-step and keeping the product of the measuring period and the intensity detected at a constant value for each wavelength, or by varying the wavelength of the radiation continuously with a rate proportional to the momentary value of the intensity detected. The invention is on the other part an apparatus for measuring spectra comprising a device (7) for varying the wavelength of the radiation to be measured and a radiation detector (3) sensing the intensity of the radiation to be measured. In the apparatus an input (17) of a comparator (5) of adjustable threshold value is connected to an output (19) of the radiation detector (3) via an integrator (4), the output (18), of the comparator (5) is connected to the control input of the device (7) for varying the wavelength step-by-step, and there is a time measuring unit (12) for measuring the time interval necessary for the output signal of the integrator (4) to change from an initial value up to the adjustable threshold value (Figure 1).

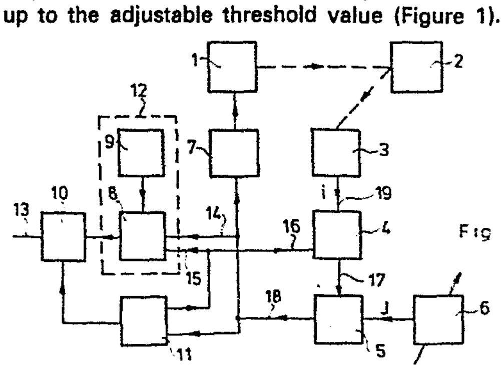


Fig 1

EP 0 096 316 A1

PATENTANWÄLTE

0096316

# TISCHER, KERN & BREHM

TISCHER, KERN & BREHM
Albert-Rosshaupter-Strasse 65 · D 8000 München 70

Representatives before the European Patent Office
Zugelassene Vertreter beim Europäischen Patentamt

H. TISCHER Dipl.-Ing.
W. KERN Dipl.-Ing.
H. P. BREHM Dipl.-Chem., Dr. phil. nat.

Albert-Rosshaupter-Strasse 65
D 8000 München 70

Telefon (089) 7605520
Telex 05-212284 pats d
Telegramme Kernpatent München

| Ihr Zeichen<br>Your Ref. | Unser Zeichen<br>Our Ref. | Datum<br>Date |
|---|---|---|
| | Közpo-7088/EUR | May 27, 1983/st |

## METHOD AND APPARATUS FOR MEASURING SPECTRA

The subject matter of the present invention is a method and apparatus for measuring spectra, with a relatively uniform effect of random noises on the error of the measured value.

## BACKGROUND ART

Measuring the intensity of a radiation is influenced by random noise in addition to other different errors. The signal--to-noise ratio can be defined by the following relationship:

$$\frac{i}{\Delta i} = K\sqrt{it}$$

where i is the intensity of the radiation, Δi is the noise of the detected intensity, t is the time interval (integration period, time constant) over which the i intensity is averaged by the measuring device, and K is a constant.

In view of the accuracy required with most of the spectrometric, e.g. spectrophotometric measurements the signal--to-noise ratio has to be kept above a specified limit. Different solutions are used for this purpose in the known devices. According to one of these solutions the time interval t is properly selected for the minimum value of the intensity over the spectrum specifying thereby the rate of the spectrum measurements. According to another solution each spectrum measurement is performed with a given rate within a constant time interval t, and the measurement is repeated several times. The effect of the noise on the measured value is decreased to the required level by averaging the values resulted by an appropriate number of measurements. It is a common disadvantage of both methods that the measurement is unnecessarily lengthy or is repeated unnecesserily many times in the high-intensity sections. A method to decrease the noise is also known whereby the spectrum is subsequently smoothened, that is the measured values are substituted with the average of the values measured within a specified wavelength range surrounding the spectrum point in question. A disadvantage of this method is that information is also lost in addition to decreasing the noise. A common problem of all the three methods is that to obtain an optimum setting - i.e. to select the time interval t, the number of the measurements and the measure of the smooting, respectively - a preliminary information is required about the spectrum to be measured.

A further solution is also known whereby the beam of radiation emitted by a monochromator is varied by adjusting the width of a slit so that in case of a measurement performed with a reference substance or a blank beam path, respectively, the output of the radiation detector is nearly constant within the total spectrum range. The disadvantage of this method is that the resolution (the bandwidth) is considerably changing with the wavelength.

## DISCLOSURE OF THE INVENTION

The present invention is based on the idea that when the measurement of the intensity i within a spectrum is performed with continuously varying the time interval t as a function of the wavelength $\lambda$ so that the value of the product $i(\lambda)\cdot t\ [i(\lambda)]$ is constant, then the relative error caused by the signal-to-noise ratio will be constant within the total spectrum range and the time devoted to the measurement is utilized optimally, too.

Hence the present invention relates on the one hand to a method for measuring spectra, wherein the intensity of the radiation to be tested is measured while varying the wavelength of the radiation, and characterized by varying the wavelength of the radiation step-by-step and keeping the product of the measuring period and the intensity detected at a constant value for each wavelength; or varying the wavelength of the radiation continuously with a rate proportional to the momentary value of the intensity detected.

With a preferred embodiment of the method according to the invention, when the wavelength is varied step-by-step, at each wavelength value a signal is generated by integrating the intensity detected with respect to the time, the time interval necessary for this integrated signal to change from an initial value up to a preselected limit value is measured, and then a quantity corresponding to the intensity is generated by dividing the difference between the preselected limit value and the initial value with a value proportional to the length of the time interval measured.

When the spectrum is intended to be scanned in a predetermined measuring period an approximate spectrum measurement is previously performed by varying the wavelength step-by-step, and said limit value is set on the basis of the approximate spectrum measurement according to the following relationship

$$J_o = \frac{T_o}{\sum_{k=1}^{n} \frac{1}{i(\lambda_k)}}$$

where $J_o$ is the difference of the initial and limit values, $T_o$ is the predetermined measuring period, $i(\lambda_k)$ is the intensity measured at the wavelength $\lambda_k$, and n is the number of the test points.

With another preferred embodiment of the method according to the invention, when the wavelength is varied continuously, signals are generated by integrating the intensity detected with respect to the time within successive time intervals, the length of each interval being inversely proportional to the varying rate of the wavelength, and then quantities corresponding to the intensity at different wavelengths are generated by dividing the values of these integrated signals with values proportional to the length of the time intervals.

By the method of the present invention a constant signal-to-noise ratio is provided in each of the test points without having any previous information about the spectrum to be measured. The invention is advantageous particularly when measuring spectra with high intensity variations.

The present invention relates on the other hand to an apparatus for measuring spectra, said apparatus comprising a device for varying the wavelength of the radiation to be measured and a radiation detector sensing the intensity of the radiation to be measured. The apparatus is characterized in that an input of a comparator of adjustable threshold value is connected to an output of the radiation detector via an integrator, an output of the comparator is connected to a control input of the device for varying the wavelength step-by-step, and furthermore the apparatus is provided with a time measuring unit for measuring the time interval necessary for the output signal of the integrator to change from an initial value up to the adjustable threshold value.

In an embodiment the time measuring unit preferably comprises a clock generator and a digital counter connected to it, the start input of the counter being commoned with the start input of the integrator and the stop input of the counter being connected to the output of the comparator. A memory may be connected to the output of the time measuring unit, wherefrom the data can be read for subsequent processing after scanning the spectrum. However, a data processing unit e.g. microprocessor may also be connected to the output of the time measuring unit to compute for each test point the reciprocal of the measured time interval which is proportional to the intensity.

The present invention also relates to an apparatus for measuring spectra, said apparatus comprising a device for varying the wavelength of the radiation to be measured and a radiation detector sensing the intensity of the radiation to be measured, wherein an output of the radiation detector is connected to both an input of an integrator and a rate control input of the device varying the wavelength continuously, a transducer (encoder) providing electric pulses for equal increments of the wavelength is connected to said device, and the apparatus is further provided with a time measuring unit to measure the time intervals elapsed between two successive control signals provided by the transducer. The rate of scanning of the spectrum can be adjusted by connecting the rate control input of the device for continuously varying the wavelength to the output of the radiation detector via an adjustable gain amplifier, wherein the measuring period can be changed by adjusing the gain of the amplifier. A preferred embodiment may comprise an analog-to-digital converter connected to the output of the integrator and a data processing unit connected to the output of the time measuring unit and the output of the analog-to-digital converter as well.

The apparatus according to the invention can be accomplished for example so that the device for varying the wavelength of the radiation to be measured varies the wavelength of a monochromator emitting a radiation onto a sample to be tested, and the radiation detector is located in the path of the radiation transmitted or reflected by the sample. Another embodiment is also possible wherein said device for varying the wavelength of the radiation to be measured comprises means for changing filters positioned between the source of radiation to be measured and the radiation detector.

## BRIEF DESCRIPTION OF THE DRAWINGS

The invention will be described in the followings on basis of preferred embodiments illustrated in the accompanying drawing, where

Fig. 1 is a block diagram of an embodiment of the apparatus according to the invention applicable in case of varying the wavelength step-by-step, and

Fig. 2 is a block diagram of another embodiment of the apparatus according to the invention applicable in case of varying the wavelength continuously.

## MODES FOR CARRYING OUT THE INVENTION

In the drawing the same elements or those with the same function are denoted with the same reference number.

In Fig. 1 the radiation emitted by a monochromator 1, having interacted with a sample 2 to be tested, is applied to a radiation detector 3 generating an electric signal proportional to the measured intensity i on its output 19, i.e. said radiation detector 3 comprises the related amplifier, too. The spectrum is to be scanned at discrete test points in such a manner that the measurement lasts at eacht test point (i.e. at each specified wavelength) until the output signal of an integrator 4 connected to the output 19 of the radiation detector 3 reaches a preselected limit value. To detect this limit an imput of a comparator 5 is connected to the output 17 of the integrator 4, while a signal corresponding to the limit value is applied to another imput of the comparator 5 by an adjustable signal source 6. The output 18 of the comparator 5 is connected firstly to a stepper input of a device 7, preferably a pulse motor, varying the wavelength of the monochromator 1, secondly to a stop input 14 of a time measuring unit 12, and thirdly to one of the inputs of a control unit 11. The time measuring unit 12 comprises a clock generator 9 and a digital counter 8 counting the clock signals of the former. The reset and start input 15 of the counter 8 as well as the reset and start input 16 of the integrator 4 are connected to one of the outputs of the control unit 11. The digital output of the counter 8 is connected to a data processing unit 10, the write control input of which being connected to the control unit 11. The data processing unit 10 is provided with a communication channel 13 to which peripheral devices e.g. a display unit or a central data processor can be connected.

After starting the apparatus illustrated in Fig. 1 the monochromator 1 is set to the first test point by means of the device 7 varying the wavelength, and then the counter 8 and the integrator 4 will be reset and started on the inputs 15 and 16, respectively. The integrator 4 will integrate the signal coming from the detector corresponding to the intensity $i(\lambda)$ at the output 19 until the integrated value reaches the preselected limit value. Then a signal received from the output 18 stops the counter 8 and steps the device 7 varying the wavelength to the next test point. After that the control unit 11 instructs the data processing unit 10 to read and store the content of the counter 8. After stepping on the counter 8 and the integrator 4 is reset and started again simultaneously by the control unit 11, with a proper time-delay.

The measuring periods related to the test points k, i.e. the time intervals $t(\lambda_k)$ necessary to reach the preselected limit value, are stored by the data processing unit 10, and the required values of intensities $i(\lambda_k)$ are generated as the ratio of the value J to the time interval $t(\lambda_k)$:

$$i(\lambda_k) = \frac{J}{t(\lambda_k)} . \qquad (1)$$

Rearranging equation (1)

$$t(\lambda_k) = \frac{J}{i(\lambda_k)} \qquad (2)$$

is given. From equation (2) the total measuring time T is

$$T = J \sum_{k=1}^{n} \frac{1}{i(\lambda_k)} \qquad (3)$$

where n is the number of the test points where measurements were performed.

The total measuring time T (the time required to scan the spectrum) depends on the value J adjustable by the signal source 6. If a total measuring time of $T_o$ is specified, the spectrum has to be scanned in advance with an approximate accuracy, e.g. with a constant time interval at each test point, as usual with the spectrophotometers. The reciprocals of the measured $i(\lambda_k)$ intensity values have to be summed for each of the test points, and the required value $J_o$ is given by rearranging equation (3):

$$J_o = \frac{T_o}{\sum_{k=1}^{n} \frac{1}{i(\lambda_k)}} .$$

In Fig. 2 the device 23 e.g. a servomotor varying the wavelength of the monochromator 1 varies the wavelength of the radiation emitted from the monochromator 1 onto the sample 2 continuously with an adjustable rate proportional to the momentary intensity $i(\lambda_k)$ detected by the radiation detector 3. To set the proportionality factor, the output 19 of the radiation detector 3 is connected to the input of the device 23 via a unit 22 of adjustable gain e.g. an adjustable gain amplifier. The output of the device 23 connected to the wavelength-varying input of the monochromator 1 is also connected to an input of a transducer 24 providing control pulses at specified wavelength values of the spectrum. These control pulses are fed to a control unit 21. The output 17 of the integrator 4 is connected to the analog input of an analog-to--digital converter 20, while the output of the analog-to--digital converter 20 as well as the output of the counter 8 are connected to a digital input of the data processing unit 10.

In the course of the measurement the wavelength of the radiation emitted by the monochromator 1 is varied continuously by the device 23 with a rate proportional to the momentary intensity $i(\lambda_k)$ detected by the radiation detector 3. The control unit 21 controls the integrator 4 and the counter 9, respectively, under the effect of the control pulses received from the transducer 24 for each specified increment of wavelength so that the integration and the counting, respectively, are performed within the interval elapsed between two successive control pulses. At the end of the integrating and counting period, respectively, i.e. when the next control pulse is received, the control unit 21 instructs the analog-to-digital converter 20 to digitalize the analog signal e.g. voltage existing on the output 17 and then the data processing unit 10 to read and store the digital signals being present on the output of the counter 8 and the analog-to-digital converter 20. Following this the integrator 4 and the counter 8 are reset and restarted by the control unit 21, and they will operate unit receiving the next control pulse. The total measuring time T of scanning the spectrum can be adjusted by varying the gain of the unit 22. The quotient of the stored, related integrated quantities and time intervals may be generated by the data processor unit 10 in the course of the spectrum measurement or following the scanning of the total spectrum, or else all the data stored may be processed after scanning several complete spectra, too.

The apparatus according to the invention can be realized differently from the embodiments illustrated in the figures. The functions of the control unit 11 and 21, respectively, may be performed by the data processing unit 10 in itself, this latter being preferably a microprocessor. An embodiment is also possible wherein the function of the time measuring unit 12 is also performed by the data processing unit 10.

CLAIMS

1. A method for measuring spectra, wherein the intensity of the radiation to be tested is measured while varying the wavelength of the radiation, characterized by varying the wavelength of the radiation step-by-step and keeping the product of the measuring period and the intensity detected at a constant value for each wavelength; or varying the wavelength of the radiation continuously with a rate proportional to the momentary value of the intensity detected.

2. The method according to claim 1, characterized in that, while varying the wavelength step-by-step, at each wavelength value a signal is generated by integrating the intensity detected with respect to the time, the time interval necessary for this integrated signal to change from an initial value up to a preselected limit value is measured, and then a quantity corresponding to the intensity is generated by dividing the difference between the preselected limit value and the initial value with a value proportional to the length of the time interval measured.

3. The method according to claim 2, characterized in that in order to scan the spectrum during a predetermined measuring period an approximate spectrum measurement is previously performed by varying the wavelength step-by-step, and said limit value is set on the basis of the approximate spectrum measurement according to the following relationship

$$J_o = \frac{T_o}{\sum_{k=1}^{n} \frac{1}{i(\lambda_k)}}$$

where $J_0$ is the difference of the initial and limit values of the integrated signal, $T_0$ is the predeterminded measuring period, $i(\lambda_k)$ is the intensity measured at the wavelength $\lambda_k$, and $n$ is the number of the test points.

4. The method according to claim 1, characterized in that, while varying the wavelength continuously, signals are generated by integrating the intensity detected with respect to the time within successive time intervals, the length of each interval being inversely proportional to the varying rate of the wavelength, and quantities corresponding to the intensity at different wavelengths are generated by dividing the values of these integrated signals with values proportional to the length of the time intervals.

5. An apparatus for measuring spectra comprising a device for varying the wavelength of the radiation to be measured and a radiation detector sensing the intensity of the radiation to be measured, characterized in that an input (17) of a comparator (5) of adjustable threshold value is connected to an output (19) of the radiation detector (3) via an integrator (4), an output (18) of the comparator (5) is connected to a control input of the device (7) for varying the wavelength step-by-step, and the apparatus comprises furthermore a time measuring unit (12) for measuring the time interval necessary for the output signal of the integrator (4) to change from an initial value up to the adjustable threshold value.

6. The apparatus according to claim 5, characterized in that said time measuring unit (12) comprises a clock generator (9) and a digital counter (8) connected to it, a start input (15) of the counter (8) being commoned with a start input (16) of the integrator (4) and a stop input (14) of the counter (8) being connected to the output (18) of the comparator (5).

7. The apparatus according to claim 5, characterized by comprising a data processor unit (10) connected to an output of the time measuring unit (12).

8. An apparatus for measuring spectra comprising a device for varying the wavelength of the radiation to be measured and a radiation detector sensing the intensity of the radiation to be measured, characterized in that an output (19) of the radiation detector (3) is connected to both an input of an integrator (4) and a rate control input of the device (23) for varying the wavelength continuously, a transducer (24) providing electrical pulses for equal increments of the wavelength is connected to said device (23), and the apparatus comprises furthermore a time measuring unit (12) for measuring time intervals elapsed between two successive electrical pulses provided by the transducer (24).

9. The apparatus according to claim 8, characterized by comprising an analog-to-digital converter (20) connected to an output of the integrator (4), and a data processing unit (10) connected to an output of the time measuring unit (12) as well as to an output of the analog-to-digital converter (20).

10. The apparatus according to claim 8 or 9, characterized in that the rate control input of the device (23) for varying the wavelength is connected to the output (19) of the radiation detector (3) via an adjustable gain unit (22).

11. The apparatus according to any of claims 5 to 10, characterized in that the device (7) for varying the wavelength of the radiation to be measured varies the wavelength of a monochromator (1) emitting a radiation onto a sample (2) to be

0096316

tested, and the radiation detector (3) is positioned in the path of the radiation transmitted or reflected by the sample (2).

12. The apparatus according to any of claims 5 to 10, characterized in that the device for varying the wavelength of the radiation to be measured comprises means for changing filters positioned between the source of radiation to be measured and the radiation detector.

(1 drawing, 2 figures)

0096316

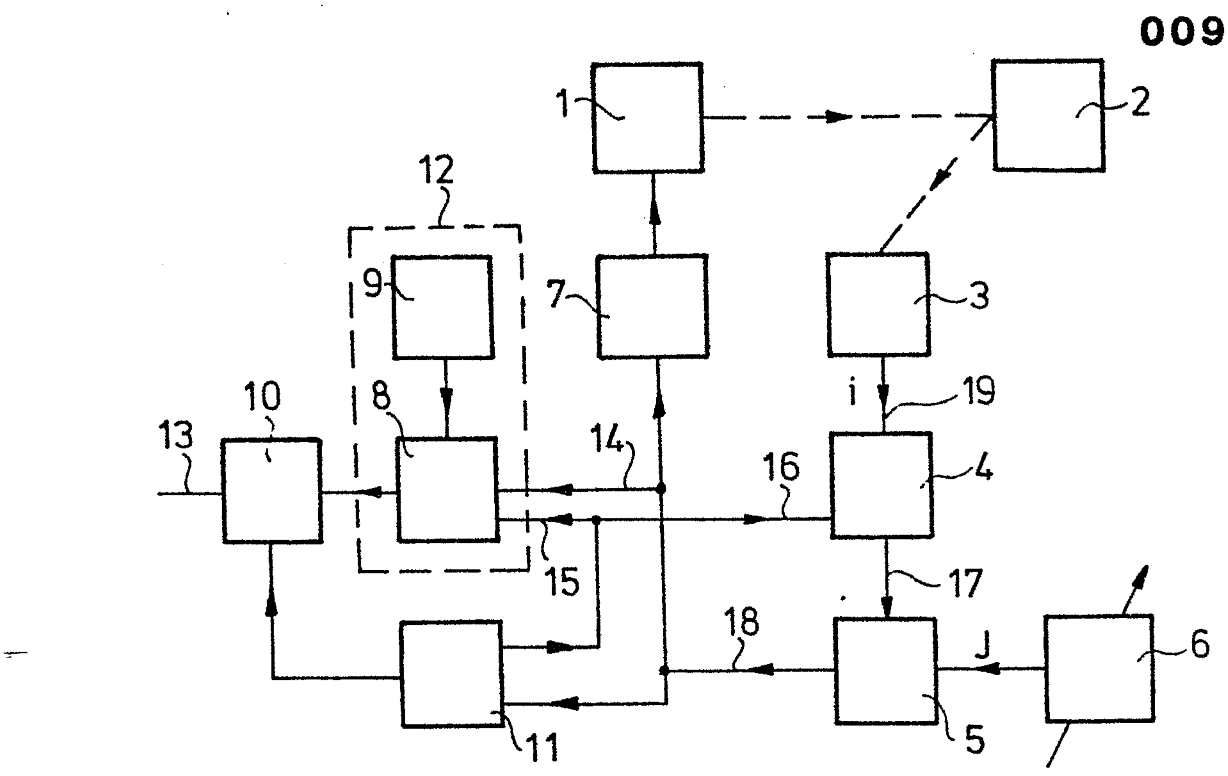


Fig. 1

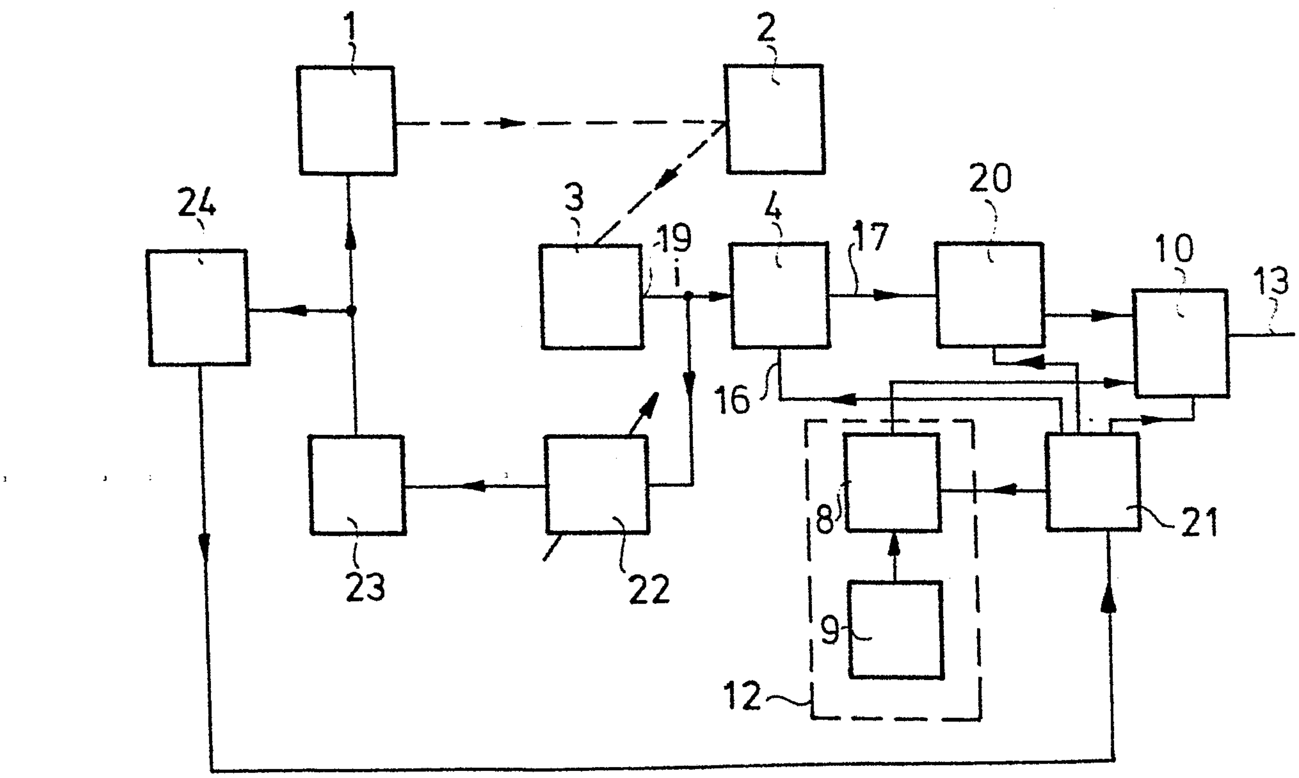


Fig. 2

European Patent Office

# EUROPEAN SEARCH REPORT

0096316
Application number

EP 83 10 5286

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-A-2 839 949 (C. ZEISS) * Claim 1 * | 1,3 | G 01 J 3/28 |
| | --- | | |
| Y | US-A-3 058 388 (G.W. OGDEN) * Claim 1 * | 1 | |
| | --- | | |
| Y | US-A-4 330 209 (N. HASHIMOTO et al.) * Claims 2-5 * | 1,3 | |
| | --- | | |
| A | US-A-4 253 765 (I. KATO et al.) * Summary * | | |
| | ----- | | |

TECHNICAL FIELDS SEARCHED (Int. Cl. 3)

G 01 J 3/00
G 01 J 3/28

The present search report has been drawn up for all claims

| Place of search | Date of completion of the search | Examiner |
|---|---|---|
| BERLIN | 02-09-1983 | FUCHS R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document